# EUROPÄISCHE PATENTSCHRIFT

(11) **EP 0 643 564 B1**
(45) Veröffentlichungstag und Bekanntmachung des Hinweises auf die Patenterteilung: **25.09.1996**
(21) Anmeldenummer: 93909950.3
(22) Anmeldetag: 11.05.1993
(51) Int. Cl.: A47J 37/10

(54) **DECKEL, INSBESONDERE SPRITZSCHUTZDECKEL, FÜR EIN GARGEFÄSS**
LID, IN PARTICULAR AN ANTI-SPLASH LID, FOR A COOKING PAN
COUVERCLE, NOTAMMENT COUVERCLE ANTI-PROJECTIONS, POUR UN RECIPIENT DE CUISSON

(30) Priorität: 05.06.1992 DE 4218546; 08.01.1993 DE 4300281
(43) Veröffentlichungstag der Anmeldung: 22.03.1995
(73) Patentinhaber: FISSLER GMBH, D-55715 Idar-Oberstein (DE)
(72) Erfinder: THELEN, Arno, D-6580 Idar-Oberstein (DE); FICKERT, Martin, D-6580 Idar-Oberstein (DE)
(74) Vertreter: KEIL & SCHAAFHAUSEN Patentanwälte
(86) Internationale Anmeldenummer: EP9301160
(87) Internationale Veröffentlichungsnummer: WO9325134

(56) Entgegenhaltungen:
- EP-A- 0 192 163
- BE-A- 696 049
- DE-A- 2 608 976
- FR-A- 1 123 148
- GB-A- 139 983
- US-A- 4 000 830

## Beschreibung

Die Erfindung bezieht sich auf einen Deckel, insbesondere Spritzschutzdeckel, für ein Gargefäß nach dem Oberbegriff des Anspruchs 1.

Die BE-A-696 049 zeigt einen verhältnismäßig flachen kugelkalottenförmigen Deckel mit einer Vielzahl von gleichzeitig bedienbaren Öffnungen, welche gleichmäßig über die gesamte Deckelwandung verteilt sind. Bedingt durch diese Gestalt der Deckelwandung und die Verteilung der Öffnungen kann eine befriedigende Belüftung des Deckelinnenraums nicht zustandekommen. Zudem muß der Deckel eine sich im wesentlichen über seine gesamte Innenfläche erstreckende Verschlußscheibe aufweisen, wodurch der Deckel verhältnismäßig schwer ist. Die Funktion des Spritzschutzes erfüllt der bekannte Deckel, wenn die zahlreichen Öffnungen geöffnet sind, nur ungenügend.

Aus der US-A-4 000 830 ist ein Deckel bekannt, welcher eine mittige Veriefung besitzt, deren Bodenbereich gelocht ist. Die obere Öffnung der Vertiefung ist mittels eines Schiebers verschließbar und öffenbar. Da in gleicher Höhe wie die Löcher in dem Bodenbereich der Vertiefung im Randbereich der Deckelwandung eine zusätzliche ständig offene Öffnung vorgesehen ist, um eine Überdruckbildung in dem mit diesem Deckel versehenen Gefäß zu verhindern, ist ein Strömen der Luft von unten nach oben und damit eine ausreichende Belüftung des Deckelinnenraumes nicht möglich.

Aus der DE-A-2 608 976 ist ein Deckel für eine Pfanne bekannt, welcher an seinem unteren Umfang einen nach innen umgestülpten, einen innenliegenden Fett-Sammelkanal bildenden Rand aufweist. Der Deckel ist mittels dieses Randes auf außen an der Wandung des Pfannenunterteils angeordnete Stützelemente aufsetzbar, so daß zwischen der Innenkante des Deckelrandes und dem Außenumfang des Pfannenunterteils ein Spalt gebildet ist. Durch den Spalt kann Luft von unten in den Deckelinnenraum eindringen, sich mit dem Gargefäß aufsteigenden Dampf und eventuell vorhandenen Fettspritzern vermischen und oben durch die Öffnung in der Spitze des Deckels wieder austreten. Dieser Deckel ist somit nur bei speziellen Gargefäßen mit Stützelementen an der Gefäßwandung einsetzbar. Der innen am Deckelrand vorgesehene Fett-Sammelkanal ist außerdem schwer zu reinigen. Der bekannte Deckel ist auch nicht für alle Garprozesse, wie Dämpfen, Dünsten, Schmoren oder Braten gleichermaßen einsetzbar, da hierfür jeweils unterschiedliche Belüftungsverhältnisse wünschenswert sind, nicht immer jedoch eine Zwangsbelüftung.

Aus der EP-B-0 192 163 ist eine Abdeckhaube für Brat- und Kochgerätschaften mit einem Haubenteil bekannt, bei welcher der Haubenteil von oben in einem auf der Gerätschaft aufsitzenden torusförmigen Kragen angeordnet ist. Der Kragen ist an seiner Außenseite mit einem hochstehenden Rand und an seiner Unterseite mit einer Rinne versehen. Das Haubenteil ist durch Halter in festem Höhenabstand über der Rinne und im Seitenabstand neben dem hochstehenden Rand gehalten. Dabei hat das kegelstumpfförmige Haubenteil an seiner Spitze eine Öffnung. Der Neigungswinkel der Kegelfläche des Haubenteils liegt zwischen 35 und 45 °. Das Haubenteil ist von oben in Haken eingesetzt, welche S-förmig ausgebildet sind und mit ihrem unteren Hakenteil den unteren Rand des Haubenteils umfassen. Der untere Rand des Haubenteils ist in die unteren Hakenteile einklipsbar. Diese mehrteilige Konstruktion ist aufwendig in der Herstellung und umständlich in der Handhabung. Der am unteren Rand des Haubenteils freibleibende Luftzutrittsspalt ist in seiner Breite festgelegt, so daß unterschiedliche Belüftungsverhältnisse nicht geschaffen werden können. Außerdem besteht immer die Gefahr des Verschüttens des Rinneninhalts bei der Handhabung.

Der Erfindung liegt die Aufgabe zugrunde, einen Deckel der eingangs genannten Art zu schaffen, welcher bei guter Belüftung des Deckelinnenraums universeller, d.h. für die unterschiedlichsten Gargefäße und für unterschiedliche Garprozesse mit Vorteil einsetzbar und einfach zu handhaben ist.

Diese Aufgabe wird erfindungsgemäß durch einen Deckel mit den Merkmalen des Anspruchs 1 gelöst.

Aufgrund der besonderen Gestaltung der Deckelwandung und der Anordnung der beiden Öffnungen - die eine an der Spitze des Deckels, die andere unmittelbar benachbart des unteren Randes - entsteht bei vollständigem oder teilweisen Freigeben der beiden Öffnungen aufgrund eines ggf. in seiner Stärke einstellbaren "Kamineffekts" eine wirkungsvolle Zwangsbelüftung und Abführung des Dampfes aus dem Deckelinnenraum nach oben, Fettspritzer dagegen können, da die untere Öffnung verhältnismäßig klein gehalten werden kann und in ihr eine Luftströmung von außen nach innen erfolgt, nach wie vor wirkungsvoll abgefangen werden. Selbstverständlich können auch mehrere untere Öffnungen über den Umfang des unteren Deckelrandes verteilt angeordnet sein, welche auch von dem gemeinsamen Betätigungsmechanismus bedient werden können. Weil in der Deckelwandung selbst eine untere Öffnung vorgesehen ist, besteht keine Notwendigkeit, das Gargefäß mit besonderen Stützelementen zu versehen, um einen Luftzutrittsspalt freizuhalten. Dadurch ist der erfundene Deckel bei jedem herkömmlichen Gargefäß einsetzbar. Aufgrund des Umstandes, daß die beiden Öffnungen mittels einer einzigen Betätigungseinrichtung willkürlich verschließbar bzw. öffenbar sind, können die Belüftungsverhältnisse unter Ausnutzung des Kamineffekts jeweils dem gewünschten Garprozeß angepaßt werden. Die Betätigungseinrichtung kann dabei so ausgebildet sein, daß die obere und die unteren Öffnungen gemeinsam mehr oder weniger freigegeben werden oder auch, daß nur die eine oder nur die andere Öffnung - mehr oder weniger freigegeben wird.

Im Rahmen einer Ausgestaltung der Erfindung ist es ferner von Bedeutung, daß die Unterseite der Deckelwandung - abweichend von der strengen Kegelform - (von innen gesehen) leicht konvex gekrümmt ist. Es hat sich überraschend herausgestellt, daß auf diese Weise nicht nur die Kaminwirkung des Deckels erhöht sondern auch ein Kondensatrückfluß von der Unterseite der Deckelwandung auf das Gargut behindert wird, so daß auf eine - schlecht zu reinigende - innere Rinnenausbildung am unteren Deckelrand verzichtet werden kann.

Bei einer vorteilhaften Ausgestaltung der Erfindung weist die Betätigungseinrichtung einen von Hand betätigbaren Schieber auf, welcher auf die Verschlußelemente für die beiden Öffnungen einwirkt bzw. mit diesen verbunden ist. Hierdurch wird die Bedienung des Deckels beim Überführen der Betätigungseinrichtung in Schließstellung und Öffnungsstellung erleichtert, insbesondere wenn der Schieber im Bereich des Deckelgriffes bzw. unmittelbar am Deckelgriff angeordnet ist.

Der Schieber weist vorzugsweise ein Schieberblech für das sichere Schließen und Öffnen der oberen Öffnung auf, was bei einfacher Konstruktion eine leichte Betätigung zuläßt.

Bei einer Weiterbildung des Erfindungsgedankens ist ferner vorgesehen, daß die Betätigungseinrichtung ein ggf. mit dem Schieber verbundenes Gestänge aufweist, welches ggf. über eine Wippe und eine zugstange, mit einem der unteren Öffnung zugeordneten z. B. als Lüftungsklappe ausgebildeten Verschlußorgan zusammenwirkt. Durch diese Maßnahme wird eine einfache und störungsfreie Möglichkeit für das Öffnen und Schließen beider Öffnungen mittels der einzigen Betätigungseinrichtung geschaffen.

Die Lüftungsklappe weist vorzugsweise einen Federarm auf, welcher an seinem freien Ende eine Klappendichtung für die weitere Öffnung trägt. Beim Überführen der Betätigungseinrichtung von Schließstellung in Öffnungsstellung wird die Klappendichtung gegen die Rückstellkraft des Federarms von der Öffnung abgehoben. Während also bspw. mittels des Schiebers und des Schieberbleches beim Überführen des Schiebers in seine Schließstellung die obere Öffnung unmittelbar verschlossen wird, gelangt auf diese Weise die Lüftungsklappe aufgrund der Rückstellkraft des Federarmes aus ihrer Öffnungsstellung wieder zwangsläufig in ihre Schließstellung zurück, so daß das sichere Verschließen beider Öffnungen mit verhältnismäßig geringem Kraftaufwand erfolgen kann.

Bei einer weiteren Ausgestaltung der Erfindung überspannt ein Handgriff die Deckelwandung im Bereich zwischen der oberen und der unteren Öffnung, der ein Betätigungselement für die Betätigungseinrichtung, wie bspw. einen Schieberknopf für den Schieber aufweist sowie in seinem Inneren die Bektätigungseinrichtung aufnimmt. Dabei erfüllt der Handgriff sowohl die Funktion der Führung und/oder Halterung der Betätigungseinrichtung als auch deren Abdeckung gegen Verschmutzung und/oder Einblick. Der Handgriff kann dabei mit vorzugsweise verdeckt liegenden Durchtrittsöffnungen versehen sein, welche ein Reinigen auch des Deckelgriffinneren und der darin vorgesehenen Teile der Betätigungseinrichtung beim Spülen des Deckels zuläßt.

Der Schieber ist vorzugsweise am und ggf. das Schieberblech in dem Handgriff gleitend geführt, um eine störungsfreie Betätigung zu gewährleisten.

Nach einer weiteren Ausgestaltung der Erfindung weist der Handgriff einen im wesentlichen L-förmigen Ober- und Untergriffteil auf und das Schieberblech ist in einem Spalt zwischen zwei zueinander parallelen Schenkeln von Ober- bzw. Untergriffteil verschiebbar. Die L-Form der Griffteile stellt sicher, daß der Handgriff nur mit den Fingern seitlich angefaßt werden kann, um eine Verbrennungsgefahr zu verhindern. Außerdem ist eine sichere Befestigungsmöglichkeit des Handgriffs auf der Oberseite des Deckels und im Bereich des unteren Deckelrandes sowie die Anordnung der Betätigungseinrichtung möglich.

Der Schieberknopf und ggf. das mit ihm verbundene Schieberblech ist bzw. sind vorzugsweise auf der Deckeloberseite in einer Ebene parallel zu der Ebene des Deckelrandes verschiebbar angeordnet. Auf diese Weise kann der Schieberknopf für die Betätigung des Schiebe- und Klappenverschlusses der beiden Öffnungen einfach mit einem der Finger der Hand des Benutzers betätigt werden. Der Handgriff des Deckels liegt damit nicht nur gut in der Hand, sondern die Betätigungseinrichtung für die Belüftungsöffnungen läßt sich auch einfach bedienen.

Wenn der Deckel nicht als Steckdeckel ausgebildet ist, bei welchem der untere Deckelrand eine Zarge darstellt, kann der untere Deckelrand gemäß einem weiteren Markmal der Erfindung zu einer Rinne aufwärts gebogen sein und zwar derart, daß die untere Öffnung im Innenwandbereich der Rinne angeordnet ist. Der Außenwandbereich der Rinne dient dadurch als Spritzschutz bei geöffneter unterer Öffnung.

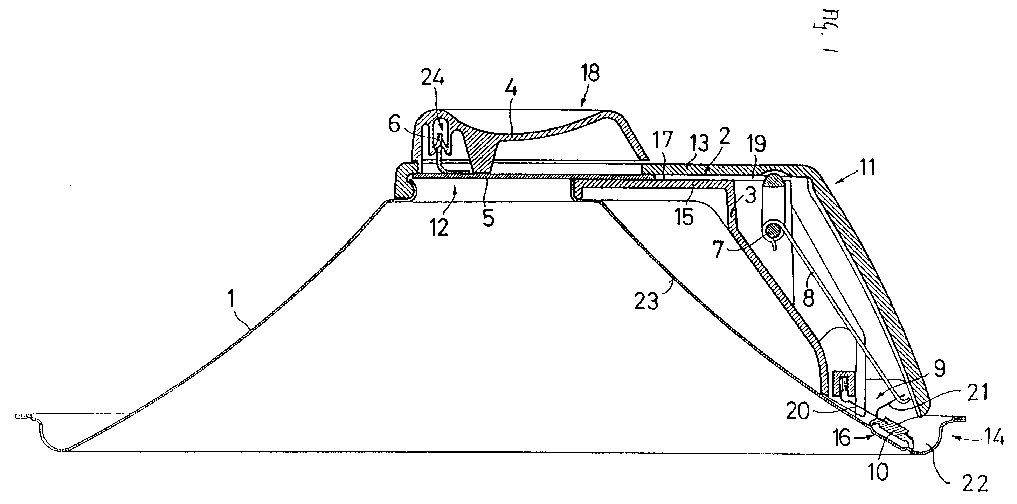

Ausführungsbeispiele der Erfindung werden nachfolgend anhand der Zeichnung näher erläutert.

Die einzige Figur veranschaulicht im Schnitt einen die Erfindung in einem Ausführungsbeispiel aufweisenden Deckel.

Die Deckelwandung 1 des bspw. als Spritzschutzdeckel für ein Gargefäß, wie einen Kochtopf oder eine Bratpfanne verwendbaren Deckels, ist von im wesentlichen kegelstumpf- oder trichterähnlicher Grundform, d.h. sie schließt in der Abdecklage des Deckels auf dem Gargefäß einen sich von unten nach oben etwa konisch verjüngenden Innenraum ein. Die Deckelwandung 1 weist an ihrer Spitze, d.h. an ihrer höchsten Stelle eine mittige obere Öffnung 12 auf. Im Bereich des unteren Deckelrandes 14 ist eine untere Öffnung 16 vorgesehen. Die Deckelwandung 1 ist ferner im Bereich zwischen der oberen Öffnung 12 und der unteren Öffnung 16 außen von einem Handgriff 11 überspannt. Der Handgriff 11 ist zweiteilig aus einem äußeren Obergriffteil 2 und einem inneren Untergriffteil 3 ausgebildet. Der Obergriffteil 2 und der Untergriffteil 3 haben im Längsschnitt etwa L-Form. Im Bereich der oberen Öffnung 12 bilden parallel zueinander angeordnete Schenkel 13, 15 des Obergriffteils 2 bzw. des Untergriffteils 3 einen parallel zu der Ebene des Deckelrandes 14 verlaufenden Spalt 17, in welchem ein Schieberblech 5 eines Schiebers 18 und ein mit dem Schieberblech 5 verbundenes Gestänge 19 verschiebbar gelagert sind. Der Schieber 18 weist einen Schieberknopf 4 auf, welcher auf der Oberseite des horizontalen Schenkels 13 des Obergriffteils 2 parallel zu der Ebene des Deckelrandes 14 verschiebbar ist, und dem flachen, parallel zur Ebene der oberen Öffnung 12 ausgerichteten Schieberblech 5. Schieberknopf 4 und Schieberblech 5 sind mittels einer aufwärts gebogenen, an dem Schieberblech 5 angebrachten und in einer Rastaussparung 24 auf der Unterseite des Schieberknopfes 4 hineinragenden Stecklasche 6 lösbar miteinander verrastet. In der Zeichnung ist der Schieber 18 in Verschlußstellung gezeigt, in welcher das Schieberblech 5 die obere Öffnung 12 vollständig verschiebt.

Beim Öffnen des in dem Spalt 17 geführten Schiebers 18 mittels Schieberknopf 4 von Hand wird über das mit dem Schieberblech 5 ausgerichtete und verbundene Gestänge 19 eine zweiarmige Wippe 7 betätigt, welche mittels einer Zugstange 8 eine Lüftungsklappe 9 an der unteren Öffnung 16 öffnet. Das Gestänge 19, die Wippe 7 und die Zugstange 8 sind vollständig im Inneren des Handgriffs 11 verdeckt angeordnet. Die mittels des Gestänges 19 betätigbare Lüftungsklappe 9 hat einen Federarm 20, welcher einends im Inneren des Handgriffes 11 befestigt ist und an seinem freien Ende eine Klappendichtung 10 trägt. Der Federarm 20 drückt in Schließstellung des Schiebers 18 die Klappendichtung 10 an den Rand der unteren Öffnung 16 und verschließt diese. Bei Betätigung des Schiebers 18 in Öffnungsrichtung wird also nicht nur das Schieberblech 5 zur Freigabe der oberen Öffnung 12 verschoben, sondern auch der Federarm 20 über das Gestänge 19, die Wippe 7 und die an einem Ansatz 21 des Federarms 20 angreifen der Zugstange 8 gegen die Federkraft nach außen gebogen, so daß sich die Klappendichtung 10 von der unteren Öffnung 16 abhebt.

Beim Zurückfahren des Schiebers 18 in die (in der Zeichnung linke) Schließstellung gibt die Zugstange 8 die Lüftungsklappe 9 wieder frei, so daß die Klappendichtung 10 aufgrund der Rückstellkraft des Federarms 20 wieder an den Rand der unteren Öffnung 16 gedrückt wird, um diese zu verschließen. Während das Schieberblech 5 in der dargestellten (linken) Stellung des Schiebers 18 die obere Öffnung 12 verschließt, ist die untere Öffnung 16 mittels der Lüftungsklappe 9 ebenfalls verschlossen. Durch Verschieben des Schiebers 18 aus der dargestellten Schließstellung (in der Zeichnung nach rechts) in eine Öffnungsstellung werden die obere Öffnung 12 und die untere Öffnung 16 teilweise oder ganz geöffnet, so daß der Dampf aus der oberen Öffnung 12 unterstützt durch die Kaminwirkung innerhalb des Deckels austreten kann.

Der Deckelrand 14 ist in dem dargestellten Fall außen zu einer Rinne 22 so weit aufwärts gebogen, daß die untere Öffnung 16 im Innenwandbereich der Rinne 22 liegt. Der Außenwandbereich der Rinne 22 dient dadurch als Schutz wegen eventuell aus der weiteren Öffnung 16 austretende Spritzer. Der Deckelrand 14 kann aber auch mit einer achsparallelen Zarge nach unten gebogen sein, wie dies für einen Steckdeckel vorteilhaft ist.

Die Unterseite 23 der Deckelwandung 1 ist leicht konvex gekrümmt, so daß das Deckelprofil düsen- bzw. venturirohrartig ausgebildet ist. Durch diese Ausgestaltung wird die zwischen den geöffneten Öffnungen 12, 16 auftretende Kaminwirkung verstärkt, so daß der in dem Gargefäß vorhandene Wasserdampf wirkungsvoll durch die obere Öffnung 12 nach außen abgeführt und ein unerwünscht großer Kondensatrückfluß an der Unterseite 23 der Deckelwandung 1 verhindert wird.

Dadurch, daß das Öffnen und Schließen der beiden Öffnungen 12, 16 der Deckelwandung 1 mittels Einhandbetätigung des Schieberknopfes 4 erfolgen kann, ist die Handhabung sehr einfach.

## Patentansprüche

1. Deckel, insbesondere Spritzschutzdeckel, für ein Gargefäß, dessen ggf. mit einem Handgriff (11) ausgestattete Deckelwandung (1) mehrere Öffnungen (12, 16) aufweist, welche mittels einer einzigen Betätigungseinrichtung veschließbar und öffenbar sind, dadurch gekennzeichnet, daß die Deckelwandung (1) im wesentlichen kegelstumpf- oder trichterförmige Gestalt mit ggf. leicht konvex gekrümmter Unterseite der Deckelwandung (1) hat und damit einen sich von unten nach oben etwa konisch verjüngenden Deckelinnenraum umschließt, und daß die Deckelwandung (1) nur eine obere Öffnung (12) an der höchsten Stelle der Deckelwandung (1) und ein oder mehrere untere Öffnungen (16) im Bereich des unteren Deckelrandes (14) aufweist, so daß bei vollständiger oder teilweiser Freigabe der Öffnungen (12, 16) aufgrund eines Kamineffektes eine Zwangsbelüftung des konischen Deckelinnenraumes stattfindet, bei welcher eine Luftströmung durch die untere Öffnung (16) von außen nach innen erfolgt.

2. Deckel nach Anspruch 1, dadurch gekennzeichnet, daß die Betätigungseinrichtung einen von Hand betätigbaren Schieber (18) aufweist.

3. Deckel nach Anspruch 2, dadurch gekennzeichnet, daß der Schieber (18) ein Schiebeblech (5) für das Schließen und Öffnen der oberen Öffnung (12) aufweist.

4. Deckel nach einem der Ansprüche 1 bis 3, dadurch gekennzeichnet, daß die Betätigungseinrichtung ein ggf. mit dem Schieber (18) verbundenes Gestänge (19) aufweist, welches ggf. über eine Wippe (7) und eine Zugstange (8), mit einem der unteren Öffnung (16) zugeordneten z. B. als Lüftungsklappe (9) ausgebildeten Verschlußorgan zusammenwirkt.

5. Deckel nach Anspruch 4, dadurch gekennzeichnet, daß die Lüftungsklappe (9) einen Federarm (20) aufweist, welcher an seinem freien Ende eine Klappendichtung (10) für die untere Öffnung (16) trägt und daß beim Überführen der Betätigungseinrichtung von Schließstellung in Öffnungsstellung die Klappendichtung (10) gegen die Rückstellkraft des Federarmes (20) von der Öffnung (16) abgehoben wird.

6. Deckel nach einem der Ansprüche 1 bis 5, dadurch gekennzeichnet, daß die Deckelwandung (1) im Bereich zwischen der oberen und der unteren Öffnung (12, 16) von dem Handgriff (11) überspannt ist, welcher in seinem Inneren, abgesehen von einem Betätigungselement für die Betätigungseinrichtung, wie bspw. einen Schieberknopf (4) für den Schieber (18), die Betätigungseinrichtung aufnimmt.

7. Deckel nach einem der Ansprüche 1 bis 6, dadurch gekennzeichnet, daß der Schieber (18) an und ggf. das Schieberblech (5) in dem Handgriff (11) gleitend geführt ist.

8. Deckel nach einem der Ansprüche 1 bis 7, dadurch gekennzeichnet, daß der Handgriff (11) einen im wesentlichen L-förmigen Ober- und Untergriffteil (2, 3) aufweist und daß das Schieberlech (5) in einem Spalt (17) zwischen zwei zueinander parallelen Schenkeln (13, 15) von Ober- bzw. Untergriffteil (2, 3) verschiebbar ist.

9. Deckel nach einem der Ansprüche 1 bis 8, dadurch gekennzeichnet, daß der Schieberknopf (4) und ggf. das mit ihm verbundene Schieberblech (5) auf der Deckeloberseite in einer Ebene parallel zu der Ebene des Deckelrandes (14) verschiebbar angeordnet ist bzw. sind.

10. Deckel nach einem der Ansprüche 1 bis 9, dadurch gekennzeichnet, daß der untere Deckelrand (14) zu einer Rinne (22) aufwärts gebogen und die untere Öffnung (16) im Innenwandbereich der Rinne (22) angeordnet ist.

## Claims

1. Lid, in particular a splash protection lid for a cooking vessel, of which the lid wall (1) possibly equipped with a handle (11) has several openings (12, 16) which can be closed and opened by means of a single operating device, characterised in that the lid wall (1) is essentially shaped as a truncated cone or hopper, where applicable with a slightly convex curved underside of the lid wall (1), and thus encloses a lid interior tapering slightly from bottom to top, and that the lid wall (1) has only one upper opening (12) at the highest point of the lid wall (1) and one or more lower openings (16) in the area of the lower lid edge (14) so that on complete or partial clearance of the openings (12, 16), because of a chimney effect, a forced ventilation of the tapered lid interior occurs in which an air flow is created through the lower opening (16) from outside to inside.

2. Lid according to claim 1, characterised in that opening device is a slider (18) operated by hand.

3. Lid according to claim 2, characterised in that the slider (18) has a slider panel (5) for closing and opening the upper opening (12).

4. Lid according to any of claims 1 to 3, characterised in that the operating device has a rod (19), where applicable connected with the slider (18), which interacts with a closing element allocated to the lower opening (16) for example as a ventilation flap (9) via where applicable a rocker bar (7) and a pull rod (8).

5. Lid according to claim 4, characterised in that the ventilation flap (9) has a spring arm (20) which at its free end has a flap seal (10) for the lower opening (16) and when the operating device is moved from the closed position to the open position the flap seal (10) is raised from the opening (16) against the reset force of the spring arm (20).

6. Lid according to any of claims 1 to 5, characterised in that the lid wall (1) in the area between the upper and the lower openings (12, 16) is spanned by the handle (11) which in its interior, in addition to an operating element for the operating device such as a slider knob for the slider (18), holds the operating device.

7. Lid according to any of claims 1 to 6, characterised in that the slider (18) and where applicable the slider panel (5) is or are guided to slide in or on the handle (11).

8. Lid according to any of claims 1 to 7, characterised in that the handle (11) essentially has an L-shaped upper and lower handle part (2, 3) and that the slider panel (5) can slide in a gap (17) between two parallel legs (13, 15) of the upper and lower handle parts (2, 3).

9. Lid according to any of claims 1 to 8, characterised in that the slider knob (4) and where applicable the connected slider panel is or are arranged on the lid top to move in a plane parallel to the plane of the lid edge (14).

10. Lid according to any of claims 1 to 9, characterised in that the lower lid edge (14) is bent upwards to form a channel and the lower opening (16) is arranged in the inner wall area of the channel (22).

## Revendications

1. Couvercle, en particulier couvercle anti-projections, pour un récipient de cuisson, dont la paroi de couvercle (1) équipée le cas échéant d'une poignée (11) présente plusieurs orifices (12, 16) qui peuvent être fermés et ouverts à l'aide d'un dispositif d'actionnement unique, caractérisé par le fait que la paroi de couvercle (1) présente une configuration essentiellement en tronc de cône ou d'entonnoir ayant un côté inférieur le cas échéant légèrement incurvé de façon convexe, délimitant ainsi un espace intérieur de couvercle diminuant de section à peu près à la manière d'un cône de bas en haut, et que la paroi de couvercle (1) présente un orifice supérieur (12) unique à l'endroit le plus haut de la paroi de couvercle (1) et un ou plusieurs orifices inférieurs (16) dans la zone du bord inférieur (14) du couvercle, de telle manière que lorsque les orifices (12, 16) sont complètement ou partiellement dégagés, il s'établit, par effet de cheminée, une ventilation forcée de l'espace intérieure conique du couvercle, avec écoulement de l'air de l'extérieur vers l'intérieur au niveau de l'ouverture inférieure (16).

2. Couvercle suivant la revendication 1, caractérisé par le fait que le dispositif d'actionnement comprend un curseur (18) pouvant être actionné manuellement.

3. Couvercle suivant la revendication 2, caractérisé par le fait que le curseur présente une tôle de curseur (5) pour la fermeture et l'ouverture de l'orifice supérieur (12).

4. Couvercle suivant l'une des revendications 1 à 3, caractérisé par le fait que le dispositif d'actionnement comprend une tringlerie (19) reliée le cas échéant au curseur (18) et coopérant, le cas échéant en passant par une bascule (17) et une tige de traction (8), avec un organe d'obturation associé à l'orifice inférieur (16) et réalisé par exemple sous la forme d'un volet de ventilation (3).

5. Couvercle suivant la revendication 4, caractérisé par le fait que le volet de ventilation (9) présente un bras de ressort (20) qui porte à son extrémité libre un joint de volet (10) pour l'orifice inférieur (16) et que lors du passage du dispositif d'actionnement de la position de fermeture à la position d'ouverture, le joint de volet (10) est soulevé de l'orifice (16) à l'encontre de l'action de la force de rappel du bras de ressort (20).

6. Couvercle suivant l'une des revendications 1 à 5, caractérisé par le fait que la paroi de couvercle (1) est chevauchée, dans la zone comprise entre les orifices supérieur et inférieur (12, 16), par la poignée (11) qui reçoit intérieurement le dispositif d'actionnement, à part un élément d'actionnement pour le dispositif d'actionnement, tel que par exemple un bouton de curseur (4) pour le curseur (18).

7. Couvercle suivant l'une des revendications 1 à 6, caractérisé par le fait que le curseur (18) est guidé coulissant sur la poignée (11) et, le cas échéant, la tôle de curseur (5) est guidée coulissante dans la poignée (11).

8. Couvercle suivant l'une des revendications 1 à 7, caractérisé par le fait que la poignée (11) présente une partie supérieure de poignée (2) et une partie inférieure de poignée (3) essentiellement en L et que la tôle de curseur (5) est mobile en translation dans une fente (17) entre deux ailes parallèles (13, 15) de la partie supérieure de poignée (2) et la partie inférieure de poignée (3).

9. Couvercle suivant l'une des revendications 1 à 8, caractérisé par le fait que le bouton de curseur (4) et le cas échéant la tôle de curseur (5) reliée au bouton est/sont disposé(s) mobile(s) en translation sur le côté supérieur du couvercle dans un plan parallèle au plan du bord de couvercle (14).

10. Couvercle suivant l'une des revendications 1 à 9, caractérisé par le fait que le bord inférieur de couvercle (14) est replié vers le haut sous la forme d'une rigole (22) et que l'orifice inférieur (16) est disposé dans la zone du flanc intérieur de la rigole (22).
